# FASCICULE DE BREVET EUROPEEN

(11) **EP 1 077 793 B1**
(45) Date de publication et mention de la délivrance du brevet: **13.12.2006**
(21) Numéro de dépôt: 00903759.9
(22) Date de dépôt: 09.02.2000
(51) Int. Cl.: B25B 27/30, B60G 15/06, B23P 19/04

(54) **PROCEDE ET DISPOSITIF DE MONTAGE PRECIS D'UNE JAMBE DE FORCE DE SUSPENSION MAC PHERSON**
VERFAHREN UND VORRICHTUNG ZUR PRÄZISEN MONTAGE EINES FEDERBEINES EINER MACPHERSON-TYP-RADAUFHÄNGUNG
METHOD AND DEVICE FOR ACCURATE MOUNTING OF A MACPHERSON STRUT SUSPENSION CONTROL ROD

(30) Priorité: 19.03.1999 FR 9903427
(43) Date de publication de la demande: 28.02.2001
(73) Titulaire: Compagnie Générale des Etablissement Michelin-Michelin & Cie, 63000 Clermont-Ferrand (FR)
(72) Inventeur: AUBAREDE, Francis, F-63230 Pontgibaud (FR); DUCLOUX, Antoine, F-58260 LA MACHINE (FR)
(74) Mandataire: Abello, Michel
(86) Numéro de dépôt international: PCT/FR2000/000303
(87) Numéro de publication internationale: WO 2000/056504

(56) Documents cités:
- DE-U- 29 815 481
- US-A- 2 646 618
- US-A- 4 009 867
- US-A- 4 703 547
- US-A- 4 732 365
- US-A- 4 785 519
- US-A- 5 680 686
- PATENT ABSTRACTS OF JAPAN vol. 006, no. 058 (M-122), 15 avril 1982 (1982-04-15) & JP 57 001630 A (TOYOTA MOTOR CORP), 6 janvier 1982 (1982-01-06)

## Description

L'invention est relative à un procédé de montage précis d'une jambe de force de suspension Mac Pherson.

L'invention est également relative à un dispositif de montage précis d'une jambe de force de suspension Mac Pherson, permettant notamment de mettre en oeuvre les étapes du procédé selon l'invention.

Le document EP-0 780 250 A2 décrit le réglage précis d'une jambe de force de suspension Mac Pherson, en utilisant des moyens de réglage sur la jambe, et en mesurant avantageusement les caractéristiques mécaniques de la jambe au moyen d'un banc de mesure approprié.

Une jambe de force de suspension Mac Pherson comporte un ressort hélicoïdal précontraint en compression.

Alors que le contact est établi sur au moins trois secteurs lorsque le ressort est en état de compression, le ressort à l'état libre, avant compression, n'est généralement en contact qu'avec un point de chaque coupelle inférieure ou supérieure.

Ce contact ponctuel limité est préjudiciable à la précision du montage des jambes de force de suspension Mac Pherson.

Sur les machines de montage actuelles, on essaye d'améliorer la précision du montage en centrant le ressort par un appui secondaire sur l'extérieur des spires, en précomprimant le ressort avant son montage sur la jambe de force, ou en utilisant des moyens équivalents.

Cependant, les solutions actuelles n'apportent pas satisfaction et conduisent à un centrage du ressort imprécis, car sensible aux dispersions des caractéristiques mécaniques des ressorts.

L'invention a pour but de remédier aux inconvénients de la technique connue, en proposant une nouvelle technique de montage précis de jambe de force de suspension Mac Pherson, insensible aux variations mécaniques et géométriques des ressorts, de mise en oeuvre économique et facile.

L'invention a pour objet un procédé de montage d'une jambe de force de suspension Mac Pherson, comportant les étapes selon la revendication 1.

Selon d'autres caractéristiques de l'invention :
- la partie de tête de montage possède deux degrés de liberté de basculement ;
- la partie de tête de montage est montée sur le corps de la tête de montage par une articulation à la Cardan ;
- la partie de tête de montage est guidée à coulissement par rapport au corps de la tête de montage.

L'invention a également pour objet un dispositif de montage précis d'une jambe de force de suspension Mac Pherson, comportant les caractéristiques selon la revendication 5.

Selon d'autres caractéristiques de l'invention :
- ladite partie est montée sur le corps de la tête de montage par une articulation à la Cardan ;
- ladite partie est conformée en plateau de réception de coupelle supérieure avec un passage central ;
- la tête de montage comporte une deuxième partie d'orientation prédéterminée apte à limiter le mouvement de basculement de ladite partie au cours de la compression du ressort ;
- la deuxième partie est conformée en plateau d'arrêt portant au moins une butée de positionnement d'arrêt.

L'invention sera mieux comprise grâce à la description qui va suivre, donnée à titre d'exemple non limitatif, en référence aux dessins annexés, dans lesquels :
- la figure 1 représente schématiquement une vue en élévation avec section partielle par la roue d'une suspension Mac Pherson ;
- les figures 2 et 3 représentent schématiquement une vue partielle en élévation avec coupe partielle par la coupelle supérieure d'une jambe de force de suspension Mac Pherson, respectivement à l'état libre et à l'état comprimé ;
- les figures 4 et 5 représentent schématiquement une vue partielle avec coupe partielle de la coupelle supérieure d'un premier mode de réalisation de dispositif de montage précis de jambe de force de suspension Mac Pherson ;
- la figure 6 représente schématiquement une vue en perspective d'une tête d'assemblage d'un deuxième mode de réalisation de dispositif de montage précis d'une jambe de force de suspension Mac Pherson ;
- les figures 7 à 10 représentent schématiquement la mise en oeuvre de l'invention en utilisant un deuxième mode de réalisation de dispositif de montage précis de jambe de force de suspension Mac Pherson.

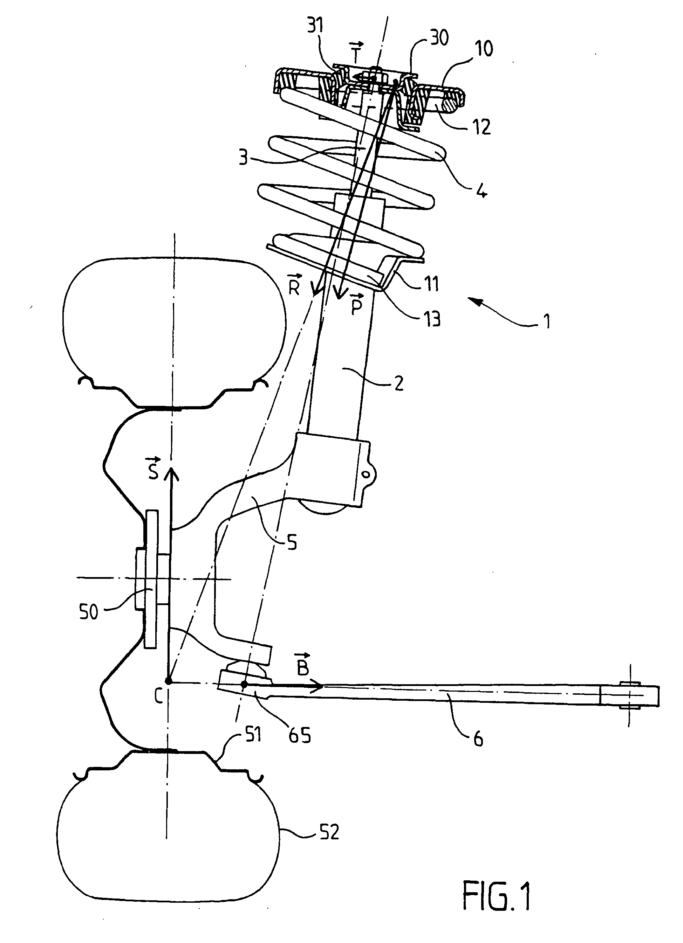

La figure 1 décrit une suspension Mac Pherson similaire à la suspension décrite à la figure 1 du document EP-0 780 250 A2.

En référence à la figure 1, une jambe de force de suspension Mac Pherson comporte un amortisseur participant au guidage de la roue et un ressort qui porte la caisse du véhicule et donne à la suspension la rigidité requise.

L'amortisseur comporte un corps 2 et une tige 3. L'extrémité supérieure 30 de la tige 3 prend appui sur la caisse du véhicule en un point d'articulation 31 matérialisé en général par une articulation élastique. Un ressort hélicoïdal 4 est monté entre une coupelle supérieure 10 et une coupelle inférieure 11. La coupelle inférieure 11 prend appui sur le corps 2 de l'amortisseur et la coupelle supérieure 10 prend appui sur la caisse du véhicule, en général aussi par l'intermédiaire d'un filtrage réalisé par ladite articulation élastique, filtrage qui peut, dans certaines réalisations, être le même pour le ressort et l'amortisseur.

Le corps 2 de l'amortisseur est rendu solidaire d'un porte-moyeu 5, de manière à supprimer tout degré de liberté entre le corps 2 et le porte-moyeu 5. Un bras inférieur 6 est articulé d'un côté sur la caisse du véhicule et de l'autre sur le porte-moyeu 5 par une articulation 65. Le porte-moyeu 5 porte le moyeu 50, sur lequel est montée une roue 51 équipée de son pneu 52.

Chaque coupelle supérieure 10 ou inférieure 11 possède une surface d'appui de réception et de centrage d'une spire d'extrémité respectivement correspondante 12 ou 13 du ressort 4. Chaque surface d'appui a une forme déterminée de manière à être en contact sur une grande longueur avec la spire d'extrémité 12 ou 13 correspondante du ressort 4, lorsque ce ressort 4 est comprimé sous l'effet du poids du véhicule. Avantageusement, chaque surface d'appui présente une forme sensiblement hélicoïdale, continue ou discontinue, et présentant de préférence au moins trois secteurs de contact avec la spire d'extrémité 12 ou 13 correspondante du ressort 4.

Les spires d'extrémité 12 et 13 du ressort 4 présentent une forme sensiblement hélicoïdale dont l'angle d'hélice varie au cours de la compression du ressort 4, alors que les formes hélicoïdales des surfaces d'appui des coupelles 10 et 11 restent invariables au cours de la compression du ressort.

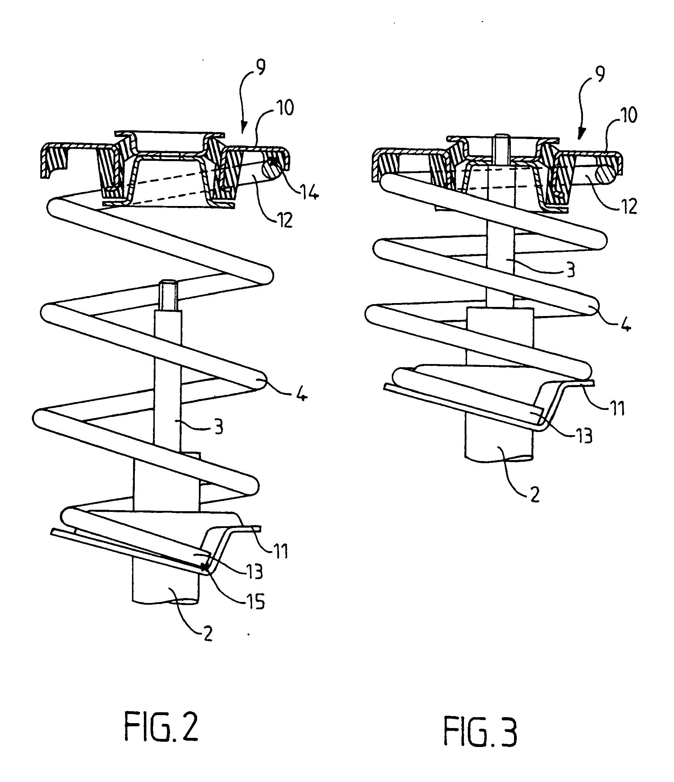

En référence aux figures 2 et 3, une jambe de force de suspension Mac Pherson comporte un amortisseur avec un corps 2 et une tige 3, un ressort 4, une extrémité supérieure 9 et une coupelle inférieure 11 pour recevoir respectivement une spire d'extrémité 12 et une spire d'extrémité 13 du ressort 4.

Dans les exemples illustrant l'invention, l'extrémité supérieure 9 est formée essentiellement par la coupelle supérieure 10 servant d'appui au ressort. Cette disposition n'est bien sûr pas limitative, l'invention couvrant aussi notamment le cas où un roulement est inséré entre l'extrémité supérieure 9 et la coupelle supérieure 10, au contact du ressort 4.

Dans la position détendue de la figure 2, le pas des spires du ressort hélicoïdal 4, ainsi que l'angle d'hélice de ces spires, est plus important que dans la position comprimée de la figure 3.

Sur la figure 2, les angles d'hélice des spires 12 et 13 d'extrémité du ressort 4 sont, par conséquent, plus importants que les angles d'hélice correspondants des coupelles supérieure 10 et inférieure 11. En raison de cette différence d'angle, les spires 12 et 13 ne sont en contact avec les coupelles 10 et 11 que de manière ponctuelle en 14 et 15.

Au contraire, dans la position comprimée de la figure 3 correspondant au montage précontraint du ressort 4, les pas et les angles d'hélice des spires d'extrémité 12 et 13 correspondent respectivement aux pas hélicoïdaux et aux angles d'hélice des coupelles 10 et 11, de sorte que le contact s'effectue selon une surface d'appui. Généralement ce contact surfacique s'effectue sur au moins trois secteurs d'appui répartis sur chaque coupelle 10 ou 11.

Le but de l'invention est, par conséquent, d'obtenir un montage précis de la jambe de force de suspension en passant de la position détendue de la figure 2 à la position comprimée de la figure 3 selon une optimisation des caractéristiques de la suspension conformes aux conditions du document EP-0 780 250 A2.

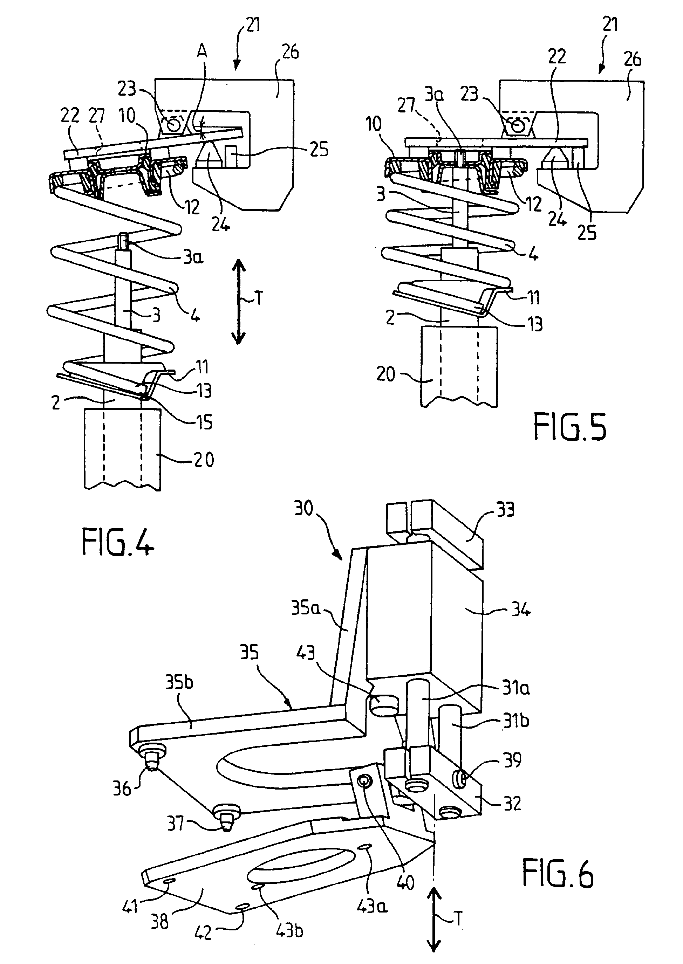

En référence aux figures 4 et 5, une jambe de suspension Mac Pherson comprenant un amortisseur avec un corps 2 et une tige 3, un ressort hélicoïdal 4 avec deux spires d'extrémité 12 et 13 et deux coupelles supérieure 10 et inférieure 11 est montée dans un premier mode de réalisation de dispositif selon l'invention.

Le dispositif selon l'invention comporte un bâti, non représenté, ou une structure de solidarisation reliant un appareil d'encastrement 20 du genre mandrin, pour maintenir en position fixe le corps 2 d'amortisseur, à une tête 21 de montage.

La tête 21 de montage et l'organe d'encastrement 20 sont montés dans le bâti non représenté en translation relative selon la flèche T : ainsi, pour passer de la position de la figure 4 à la position de la figure 5, il suffit, par conséquent, d'effectuer un déplacement relatif en translation selon la flèche T de l'organe 20 par rapport à la tête de montage 21.

Sur la figure 4, le ressort 4 à l'état libre est en appui surfacique par sa spire d'extrémité supérieure 12 sur la coupelle supérieure 10. La coupelle supérieure 10 est montée sur un plateau 22 avec liberté de mouvement selon au moins un axe par rapport à la tête de montage 21 : cette liberté de mouvement permet d'orienter et de poser la coupelle supérieure 10 sur la spire 12 d'extrémité supérieure du ressort 4.

Dans la position libre, le plateau 22 et la coupelle supérieure 10 forment un angle A avec le plan perpendiculaire à l'axe de l'amortisseur. La spire 13 d'extrémité inférieure du ressort 4 repose sur la coupelle inférieure 11 en au moins un point 15.

Pour donner une liberté de basculement au plateau 22 portant la coupelle supérieure 10, une articulation en rotation autour d'au moins un axe 23 transversal à l'axe d'amortisseur est prévue. Le plateau 22 de support est, par conséquent, monté flottant ou oscillant autour de l'axe 23 solidaire de la tête 21 de montage.

En effectuant un mouvement de rapprochement dans le sens T, le ressort 4 est comprimé au cours du rapprochement et exerce une force de compression sur une butée élastique 24 d'amortissement jusqu'à venir en compression sur une butée fixe 25 limitant le mouvement de pivotement du plateau 22.

De préférence, la tête de montage 21 présente un corps 26 avantageusement en forme d'étrier portant d'un côté l'axe 23 de pivotement du plateau 22 et d'un autre côté la butée élastique 24 d'amortissement et la butée 25 d'arrêt.

Sur la figure 5, lorsque le plateau 22 comprime totalement la butée élastique 24 et est arrêté par la butée 25, la position du plateau 22 correspond à une position prédéterminée dans laquelle la coupelle supérieure 10 est centrée de manière prédéterminée par rapport à l'axe de l'amortisseur. Dans cette position prédéterminée, l'extrémité filetée 3a de la tige d'amortisseur passe à travers l'orifice central de la coupelle supérieure 10, de manière à permettre le montage en précontrainte de la jambe de suspension par le vissage d'un écrou terminal sur l'extrémité filetée 3a de la tige 3 d'amortisseur.

Ainsi, après avoir orienté convenablement la coupelle supérieure 10 par rapport à la coupelle inférieure 11 et à l'amortisseur, on obtient automatiquement le montage précis recherché de la jambe de force Mac Pherson.

Pour permettre ce vissage, on prévoit avantageusement que le plateau 22 comporte un passage central 27 permettant le vissage d'un écrou terminal. Ce passage central 27 permet également l'inspection visuelle du montage.

En référence à la figure 6, un deuxième mode de réalisation de dispositif selon l'invention comporte des éléments analogues à ceux des figures 4 et 5 et se distingue du premier mode de réalisation par une tête de montage perfectionnée.

La tête de montage 30 de ce deuxième mode de réalisation est montée sur deux barres 31a, 31b de guidage entretoisées entre elles par des organes de serrage 32, 33 appropriés. Les blocs 32, 33 de serrage fournissent ainsi un support rigide immobile déplaçable en mouvement relatif par rapport à un mandrin inférieur de fixation d'amortisseur non représenté.

Un corps 34 porte une équerre 35 dont un des côtés 35a est fixé au corps 34 et l'autre côté 35b constitue un plateau de direction prédéterminée. Le plateau 35b porte deux pions tronconiques 36, 37 formant butée de positionnement.

Un plateau flottant 38 est monté libre en basculement selon un montage à la Cardan autour de deux axes 39 et 40, par exemple sur l'organe de serrage 32 ou sur tout autre élément solidaire du bâti du dispositif.

Le plateau 38 permet, par conséquent, de recevoir une coupelle supérieure de jambe de force et de prendre toute position relative, sans nécessiter de réglage ou d'orientation préalable.

Les dimensions de la tête 30 de montage sont déterminées pour qu'en position de compression maximale, le plateau 38 soit dans une position prédéterminée, dans laquelle des orifices 41 et 42 sont positionnés et centrés par les tétons tronconiques 36 et 37 du plateau d'arrêt 35b.

La tête 30 de montage possède par conséquent une possibilité de déplacement relatif en translation T par rapport au mandrin non représenté de fixation d'amortisseur, ainsi que de liberté de mouvement autour des axes 39 et 40 positionnés selon un montage à la Cardan.

Une butée 43 de positionnement en appui est avantageusement prévue pour limiter le déplacement relatif en translation du plateau 38 et assurer son parallélisme par rapport au plateau 35b: ce positionnement présente une grande précision résultant uniquement de l'utilisation de trois points d'arrêt 36, 37, 43, nécessaires et suffisants pour assurer le parallélisme de deux plans.

Bien entendu, l'invention n'est pas limitée au cas d'un parallélisme de deux plans, mais s'étend à toute disposition dans laquelle trois butées permettent de fixer avec précision la position relative d'un plateau 38 d'accostage selon une direction de plan prédéterminée et ce en cours de compression du ressort 4.

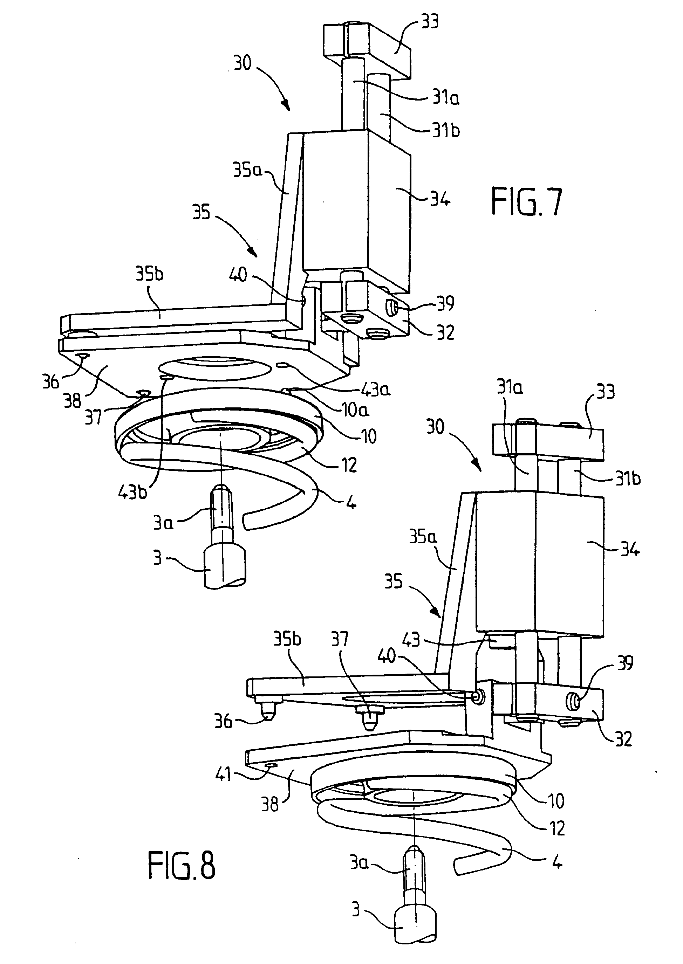

En référence aux figures 7 à 10, le procédé de mise en oeuvre de l'invention comporte plusieurs étapes d'introduction, d'accostage, de compression et de montage.

Sur la figure 7, le plateau 38 est remonté contre le plateau 35b par un moyen quelconque non représenté exerçant une traction sur l'organe 33 et provoquant un coulissement des colonnes 31a, 31b à travers le corps 34. Cette position relevée du plateau 38 permet l'introduction d'une coupelle supérieure 10 posée sur l'extrémité supérieure 12 d'un ressort 4 entourant un amortisseur comportant une tige 3 avec une extrémité filetée 3a.

L'introduction de l'ensemble de ces éléments de jambe de force sous la tête de montage 30 est préalable à l'étape suivante d'accostage.

Sur la figure 8, l'accostage du plateau 38 sur la coupelle supérieure 10 a été effectué en laissant simplement descendre l'ensemble de guidage comportant les colonnes 31a, 31b entretoisées par les éléments 32 et 33. Au cours de cette descente, la coupelle supérieure 10 vient se positionner à l'aide de deux pions 10a, 10b dans deux cavités 43a, 43b du plateau 38. De manière alternative, on peut également envisager, par exemple, d'autres variantes de réalisation faisant intervenir un centrage conique d'une extrémité supérieure 9 par rapport à un plateau tel que 38. L'accostage de la coupelle supérieure 10 et du plateau 38 assure ainsi un positionnement relatif parfait de la coupelle supérieure 10 par rapport au plateau 38 monté flottant par une articulation à la Cardan sur l'ensemble mobile comportant les colonnes 31a, 31b de guidage. La présence des colonnes de guidage 31a, 31b , autorisant une translation T permet ainsi de positionner précisément le plateau sur la coupelle 10, quelle que soit la longueur libre du ressort 4. Le dispositif permet ainsi le montage de ressorts de différentes longueurs sans modification des réglages.

De préférence, le plateau 38 repose par son propre poids sur la coupelle supérieure 10, sans introduire d'effort parasite dans le montage en raison des deux libertés de mouvement autour des deux axes 39 et 40.

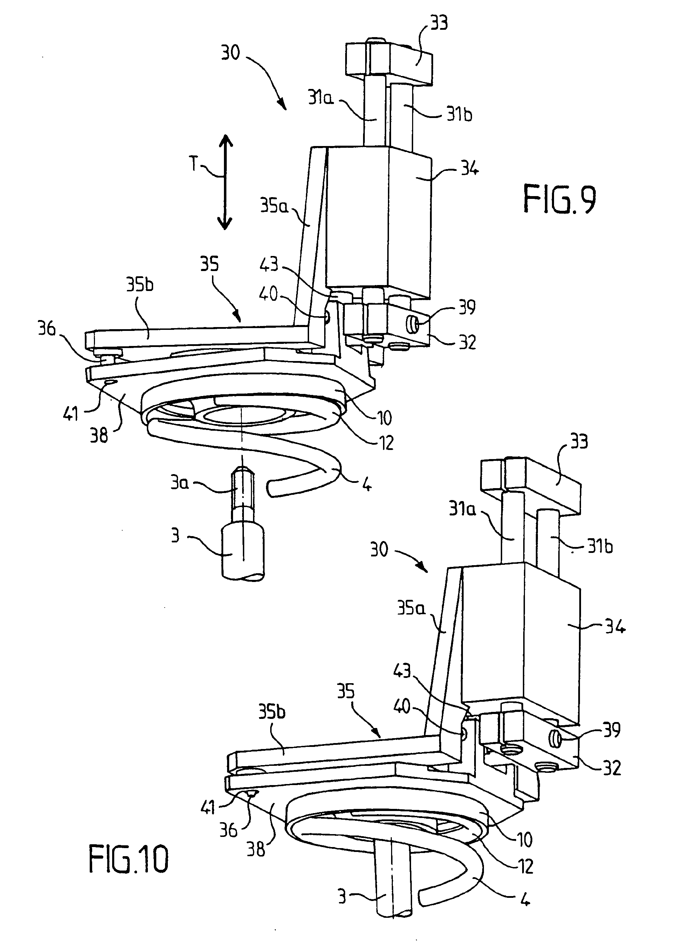

Sur la figure 9, après avoir réalisé l'accostage du plateau 38 avec la coupelle supérieure 10, on débute le mouvement de compression du ressort 4 par déplacement relatif du mandrin supportant le corps d'amortisseur par rapport au corps 34. Le ressort 4 pousse ainsi dans un premier temps l'ensemble de la tête 30 dans le sens de la flèche T, de manière à déplacer le plateau 38 parallèlement à lui-même. On arrive ainsi à la position de début de compression du ressort 4 dans laquelle le plateau 38 positionné sur la coupelle supérieure 10 vient au contact de la butée 43 solidaire du plateau 35b, ce qui limite le déplacement relatif vers le haut du plateau 38.

On poursuit ensuite la compression en comprimant le ressort jusqu'à la position de la figure 10.

Sur la figure 10, dans une position atteinte en cours de compression, les plateaux 35b et 38 sont positionnés exactement l'un par rapport à l'autre grâce aux pions 36, 37 de positionnement coopérant avec les passages 41, 42 du plateau 38.

En raison du positionnement de la coupelle supérieure 10 par rapport au plateau 38 et du positionnement en cours de compression du plateau 38 par rapport au plateau 35b, le ressort 4 se trouve précontraint dans la position prédéterminée recherchée conformément aux conditions d'optimisation du document EP-0 780 250 A2.

En fin de compression, la tige d'amortisseur 3 est centrée par son extrémité filetée 3a pénétrant à travers et dépassant par dessus la coupelle supérieure 10. Le montage est alors terminé en vissant un écrou terminal sur l'extrémité filetée 3a. Le vissage de l'écrou terminal 3a est effectué aisément en raison des évidements pratiqués à la fois dans le plateau 38 et dans le plateau 35b.

L'invention n'est pas limitée aux deux modes de réalisation décrits, mais couvre au contraire toute modification de forme et toute variante de réalisation dans le cadre invention défini par les revendications formulées ci-après.

On peut, par exemple, compléter le dispositif selon la présente invention en le combinant avec des moyens de mesure tels que ceux décrits dans le document EP-0 780 250 A2. Il suffit, à cet effet, d'instrumenter le corps 34 pour réaliser les mesures prévues dans le document EP-0 780 250 A2 ou prévoir un plateau 35b lui-même instrumenté pour détecter les contraintes transmises par la jambe de force avant vissage de l'écrou terminal sur l'extrémité filetée 3a de la tige 3 d'amortisseur.

## Revendications

1. Procédé de montage d'une jambe de force de suspension Mac Pherson, comportant les étapes suivantes :
a) introduire les éléments constitutifs (2-11) de la jambe de force, incluant un corps (2), une tige (3), un ressort (4) et une extrémité supérieure (9) incluant une coupelle supérieure (10), sous une tête de montage (30, 21), ladite tête (30, 21) de montage comprenant une partie (38, 22) possédant au moins un degré de liberté de basculement ;
b) accoster l'extrémité supérieure (9) de la jambe de force avec ladite partie (38, 22) de tête (30, 21) de montage ;
c) comprimer le ressort (4) par déplacement relatif de la tête de montage (30, 21), par rapport à un moyen d'immobilisation (20) ;
d) monter la jambe de force avec son ressort (4) précontraint, lorsque la tige (3) d'amortisseur dépasse à travers la coupelle supérieure (10), cette étape consistant à fixer ladite coupelle supérieure (10) à ladite tige (3),
**caractérisé en ce que** l'étape consistant à monter la jambe de force avec son ressort précontraint est effectuée lorsque ladite partie (38, 22) de tête (30, 21) de montage arrive en butée dans une position selon une orientation prédéterminée choisie, ledit moyen d'immobilisation (20) étant en prise avec le corps (2) de l'amortisseur.

2. Procédé selon la revendication 1, dans lequel la partie (38) de tête (30) de montage possède deux degrés de liberté de basculement.

3. Procédé selon la revendication 2, dans lequel la partie (38) de tête (30) de montage est montée sur le corps de la tête (30) de montage par une articulation à la Cardan.

4. Procédé selon l'une quelconque des revendications précédentes, dans lequel la partie (38) de tête de montage est guidée à coulissement par rapport au corps de la tête (30) de montage.

5. Dispositif de montage d'une jambe de force de suspension Mac Pherson, comportant un moyen d'immobilisation (20) d'un amortisseur relié à une tête (21, 30) de montage, déplaçables l'un par rapport à l'autre, la tête de montage (21, 30) comportant une partie (22, 38) avec au moins un degré de liberté de basculement selon au moins un axe de basculement (23, 40) et apte à accoster l'extrémité supérieure (9) d'une jambe de force présentant un axe d'amortisseur et comprenant un ressort hélicoïdal (4), ledit dispositif comprenant un moyen de déplacement (T) relatif du moyen d'immobilisation (20) de la jambe de force par rapport à la tête (21, 30) de montage, pour comprimer le ressort (4) au cours de ce déplacement (T), le dispositif comportant au moins une butée (25 ; 36, 37) d'arrêt apte à arrêter ladite partie (22, 38) selon une orientation prédéterminée choisie, **caractérisé en ce que** ledit moyen d'immobilisation (20) est apte à immobiliser ladite jambe de force dans une position telle que lorsque la jambe de force est immobilisée par ledit moyen d'immobilisation (20), ledit axe de basculement (23, 40) et ledit axe d'amortisseur soient gauches.

6. Dispositif selon la revendication 5 **caractérisé par le fait que** ladite partie (22, 38) est montée sur le corps de la tête de montage (21, 30) par une articulation à la Cardan.

7. Dispositif selon la revendication 5 ou la revendication 6, **caractérisé par le fait que** ladite partie (22, 38) est conformée en plateau de réception de l'extrémité supérieure (9) avec un passage central (27).

8. Dispositif selon l'une quelconque des revendications 5 à 7, **caractérisé par le fait que** la tête de montage (21, 30) comporte une deuxième partie (25, 35b) d'orientation prédéterminée apte à limiter le mouvement de basculement de ladite partie (22, 38) au cours de la compression du ressort (4).

9. Dispositif selon la revendication 8, **caractérisé par le fait que** la deuxième partie (35b) est conformée en plateau d'arrêt et en ce qu'au moins une butée (36 ou 37) de positionnement d'arrêt limite le rapprochement relatif de ladite partie (22, 38) et du plateau d'arrêt (35b).

## Claims

1. A method for mounting a strut of a MacPherson suspension, comprising the following steps:
a) introducing the constituent elements (2-11) of the strut, including a body (2), a rod (3), a spring (4) and an upper end (9) including an upper spring retainer (10), beneath a mounting head (30, 21), said mounting head (30, 21) comprising a part (38, 22) having at least one degree of freedom in tilting;
b) offering up the upper end (9) of the strut to said part (38, 22) of the mounting head (30, 21);
c) compressing the spring (4) by relative displacement of the mounting head (30, 21) relative to an immobilisation means (20);
d) mounting the strut with its spring (4) prestressed, when the shock absorber rod (3) extends through the upper spring retainer (10), this stage consisting of fixing said upper spring retainer (10) to said rod (3),
**characterised in that** the stage consisting of mounting the strut with its spring prestressed is carried out when said part (38, 22) of the mounting head (30, 21) comes into a stop position in a selected predetermined orientation, said immobilisation means (20) being engaged with the body (2) of the shock absorber.

2. A method according to Claim 1, in which the part (38) of the mounting head (30) has two degrees of freedom in tilting.

3. A method according to Claim 2, in which the part (38) of the mounting head (30) is mounted on the body of the mounting head (30) by a universal joint.

4. A method according to any one of the preceding claims, in which the part (38) of the mounting head is guided so as to slide relative to the body of the mounting head (30).

5. A device for mounting a strut of a MacPherson suspension, comprising a means (20) for immobilising a shock absorber which is connected to a mounting head (21, 30), which are displaceable relative to one another, the mounting head (21, 30) comprising a part (22, 38) having at least one degree of freedom in tilting about at least one tilting spindle (23, 40) and capable of being offered up to the upper end (9) of a strut having a shock absorber spindle and comprising a coil spring (4), said device comprising a means for relative displacement (T) of the immobilisation means (20) for the strut relative to the mounting head (21, 30), in order to compress the spring (4) during this displacement (T), the device comprising at least one limit stop (25; 36, 37) capable of stopping said part (22, 38) in a selected predetermined orientation, **characterised in that** said immobilisation means (20) is capable of immobilising said strut in a position such that when the strut is immobilised by said immobilisation means (20), said tilting spindle (23, 40) and said shock absorber spindle are skewed.

6. A device according to Claim 5, **characterised by** the fact that said part (22, 38) is mounted on the body of the mounting head (21, 30) by a universal joint.

7. A device according to Claim 5 or Claim 6, **characterised by** the fact that said part (22, 38) is shaped as a plate for receiving the upper end (9) with a central passage (27).

8. A device according to any one of Claims 5 to 7, **characterised by** the fact that the mounting head (21, 30) comprises a second part (25, 35b) of predetermined orientation capable of limiting the tilting movement of said part (22, 38) during compression of the spring (4).

9. A device according to Claim 8, **characterised by** the fact that the second part (35b) is shaped as a stop plate and in that at least one positioning limit stop (36 or 37) limits the relative movement towards each other of said part (22, 38) and the stop plate (35b).

## Patentansprüche

1. Verfahren zur Montage eines Federbeins einer Mac Pherson-Radaufhängung mit den folgenden Schritten:
a) Einfügen der grundlegenden Baueinheiten (2-11) des Federbeins, umfassend einen Körper (2), einen Stab (3), eine Feder (4) und ein oberes Endstück (9), umfassend einen oberen Teller (10) unterhalb eines Montagekopfes (30, 21), wobei der Montagekopf (30, 21) einen Bereich (38, 22) umfasst, der zumindest einen Kipp-Freiheitsgrad besitzt;
b) Anlegen des oberen Endstücks (9) des Federbeins an den Bereich (38, 22) des Montagekopfs (30, 21);
c) Zusammenpressen der Feder (4) durch relative Verschiebung des Montagekopfes (30, 21), bezogen auf ein Blockierungsmittel (20);
d) Montieren des Federbeins mit seiner vorgespannten Feder (4), bis der Stab (3) des Dämpfers durch den oberen Teller (10) herausragt, wobei dieser Schritt darin besteht, den oberen Teller (10) an dem Stab (3) zu fixieren,
**dadurch gekennzeichnet, dass** der Schritt, der darin besteht, das Federbein mit der vorgespannten Feder zu montieren, ausgeführt wird, wenn der Bereich (38, 22) des Montagekopfes (30, 21) in einer Position mit einer vorbestimmten ausgewählten Ausrichtung zum Anschlag kommt, wobei das Blockierungsmittel (20) in Eingriff mit dem Körper (2) des Dämpfers steht.

2. Verfahren nach Anspruch 1, wobei der Bereich (38) des Montagekopfes (30) zwei Kipp-Freiheitsgrade besitzt.

3. Verfahren nach Anspruch 2, wobei der Bereich (38) des Montagekopfes (30) auf dem Körper des Montagekopfes (30) mittels eines Kardan-Gelenks montiert ist.

4. Verfahren nach einem der vorhergehenden Ansprüche, wobei der Bereich (38) des Montagekopfes bezüglich des Körpers des Montagekopfs (30) gleitend geführt ist.

5. Vorrichtung zur Montage eines Federbeins einer Mac Pherson-Radaufhängung umfassend ein Blockierungsmittel (20) eines Dämpfers, das mit einem Montagekopf (21, 30) gegeneinander verschiebbar verbunden ist, wobei der Montagekopf (21, 30) einen Bereich (22, 38) mit zumindest einem Kipp-Freiheitsgrad um zumindest eine Kipp-Achse (23, 40) aufweist und dazu geeignet ist, ein oberes Endstück (9) eines Federbeins, das eine Dämpferachse aufweist und eine schraubenförmige Feder (4) umfasst, anzulegen, wobei die Vorrichtung ein Verschiebemittel (T) relativ zum Blockierungsmittel (20) des Federbeins, bezüglich des Montagekopfs (21, 30) aufweist, um die Feder (4) im Verlauf der Verschiebung (T) zu komprimieren, wobei die Vorrichtung zumindest einen Endanschlag (25; 36, 37) aufweist, der geeignet ist, den Bereich (22, 38) in einer ausgewählten vorbestimmten Ausrichtung anzuhalten, **dadurch gekennzeichnet, dass** das Blockierungsmittel (20) geeignet ist, das Federbein in einer solchen Position zu blockieren, dass, wenn das Federbein durch das Blockierungsmittel (20) blockiert ist, die Kipp-Achse (23, 40) und die Dämpferachse windschief sind.

6. Vorrichtung gemäß Anspruch 5, **dadurch gekennzeichnet, dass** der Bereich (22, 38) auf dem Körper des Montagekopfes (21, 30) mittels eines Kardan-Gelenks montiert ist.

7. Vorrichtung nach Anspruch 5 oder Anspruch 6, **dadurch gekennzeichnet, dass** der Bereich (22, 38) einer Platte zur Aufnahme des oberen Endstücks (9) entspricht, mit einem zentralen Bereich (27).

8. Vorrichtung nach einem der Ansprüche 5 bis 7, **dadurch gekennzeichnet, dass** der Montagekopf (21, 30) einen zweiten Bereich (25, 35b) zur vorbestimmten Ausrichtung aufweist, der geeignet ist, eine Kipp-Bewegung des Bereichs (22, 38) im Verlauf des Zusammenpressens der Feder (4) einzuschränken.

9. Vorrichtung gemäß Anspruch 8, **dadurch gekennzeichnet, dass** der zweite Bereich (35b) einer Endplatte entspricht und **dadurch**, dass zumindest ein Anschlag (36 oder 37) der Endpositionierung die relative Annäherung des Bereichs (22, 38) und der Endplatte (35b) begrenzt.
